# EUROPEAN PATENT SPECIFICATION

(11) **EP 3 202 243 B1**
(45) Date of publication and mention of the grant of the patent: **29.08.2018**
(21) Application number: 17153068.6
(22) Date of filing: 25.01.2017
(51) Int. Cl.: A01B 63/11, F16H 47/04

(54) **VEHICLE IMPLEMENT CONTROL**
FAHRZEUGVORRICHTUNGSSTEUERUNG
CONTROLE D'UN OUTIL DE VÉHICULE

(30) Priority: 02.02.2016 GB 201601877
(43) Date of publication of application: 09.08.2017
(73) Proprietor: AGCO International GmbH, 8212 Neuhausen am Rheinfall (CH)
(72) Inventor: Gschwendtner, Christian, 87616 Marktoberdorf (DE); Ostenried, Guenther, 87616 Marktoberdorf (DE); Unsinn, Werner, 87616 Marktoberdorf (DE)
(74) Representative: AGCO Intellectual Property Department

(56) References cited:
- EP-A1- 2 745 666
- EP-A1- 2 815 938
- EP-A1- 2 889 515
- EP-A2- 1 870 375
- JP-A- 2007 143 509
- JP-A- 2010 213 604
- US-A- 5 505 267
- US-A- 5 911 769
- US-A1- 2013 046 446

## Description

### Field of the Invention

This invention concerns a linkage control system for a tractor.

### Background of the Invention

A hitch, such as a three-point linkage is a known arrangement used to attach implements to a vehicle, for example an agricultural tractor for towing. The implement may be fully-mounted or semi-mounted whereby a semi-mounted implemented has a wheel engaging with the ground during soil operation and a fully-mounted implement puts all of its load on the three-point linkage.

Three point linkages most frequently consist of two lower lifting arms to which an implement is attached. The lower lifting arms can be pivoted by respective hydraulic actuating cylinders to adjust the height position of the implement relative to the tractor. Furthermore, these lower lifting arms may be manually adjusted in length and thus be adapted to the type of implement to be attached. An additional top link connects the implement to the tractor on a level above the lower lifting arms. This top link is used to pivot the implement about a horizontal transverse axis and is adjustable by means of a threaded connection, or a hydraulic cylinder.

Alternative designs of three-point linkages are known, such as the arrangements shown in US6,321,851, US2003/217852 and US5,997,024 in which the lower links are replaced by two, or four variable length hydraulic rams. This variable length ram arrangement enables multi axis movement of any implement attached to the linkage. A further example of a prior art system is found in European patent application publication number EP2889515A1.

To control the three-point linkage, modern tractors are mainly equipped with electronic linkage control systems to improve work quality and operator comfort during operation.

Such electronic linkage control systems operate in three well known modes:
- Position control mode: In general, the tractor speed is kept constant by a speed control system and the position of the lower lifting arms is sensed directly or indirectly so that the working depth of the implement in the soil can be adjusted within limits set by the operator whilst the speed of the tractor is kept constant. In the position control mode, the height of the linkage is determined by a function, H which relies solely on a height position component HP inputted or controlled by the operator via a depth controller.
- Draft control mode: The implement is raised and lowered in the soil automatically depending on the draft force applied by the implement to reduce fuel consumption, avoid engine stall or avoid damage of the implement or tractor. Again, vehicle speed is kept constant. If the implement is lowered into the ground an initial draft is applied defining a zero level. The operator can then set a value representing a force increase which means that the operator can decide how fast the implement is lifted when a small force increase or a large force increase occurs. The value of the force entered by the operator does not represent an exact value of the force applied, e.g. 5 kN, but defines the responsiveness of the draft control. The objective of this function is to move the implement while avoiding excessive draft or pull force variations.

Therefore, a draft force sensor, typically in the form of a draft force sensing pin which connects the lower lifting arms to the tractor chassis is used to measure the horizontal load applied to the tractor by the implement. In the draft control mode, the height of the linkage is determined by a function, H which relies on a height draft component HD resulting from the draft force.
- Intermix control mode: This control arrangement, as its name implies is a mixture of position and draft control modes in which a draft control system can only lift the implement within a limited range of positions. This function is provided to avoid excessive movement of the implement in the soil resulting in poor working quality. Again, vehicle speed is kept constant by a speed control system. In the intermix control mode, the height of the linkage is determined by a function H which relies on both the height draft component HD (from the draft mode) and the height position component HP (from the position control mode). A mix controller can vary the ratio of HD:HP and thus vary the influence from each of the position and draft control modes.

Both the Draft control mode and Intermix control mode are referred to as draft control modes or draft modes as they are both rely on the draft force for control.

The applicant's pending application WO2013/053645 describes an electronic linkage control wherein the draft force sensing pin is omitted and the variation of the draft force of the linkage is determined from the variation in the hydraulic drive circuit pressure. As described in WO2013/053645, such systems may also be used for implements which are simply towed by connection to e.g. a ball hitch, rather than being fully-mounted. Different to hitch mounted implements the weight of the implement mainly rests on the ground via the implement wheels and actuators are provided on the implements controlling linkages thereon to raise and lower soil engaging means. The actuators, mainly hydraulic actuating cylinders similar to those used for three point linkages, are thereby supplied and controlled by the hydraulic supply system and valve arrangements of the tractor in a known manner.

Furthermore, an implement may be semi-mounted, which means that the implement is mounted to the lower lifting arms of the tractor and further may be equipped with a ground engaging wheel so that the weight of the implement rests on the lower links and the ground via the implement wheels. To raise and lower the soil engaging means of the implement, the linkage of the tractor and the linkage of the implement must be adjusted conjointly.

Accordingly, the term "linkage" may be understood as not limited to a three-point linkage of a tractor, but also includes linkages to move soil engaging means of towed implements.

Normally, in the draft control mode, the operator sets a value indicative of an acceptable draft force (depending on the condition of the ground and desired vehicle speed). If the draft force then rises continuously because a plough in the ground has hit a rock, the draft control will move the linkage and therefore the plough upwards so that draft force is reduced. If the draft force is reduced, the control will then lower the linkage and plough again into ground. In this way, the plough will automatically pass a rock in the ground avoiding damage to it.

Problems can arise with the linkage controls described above when a driver brakes. It is typical for some CVT (continuously variable transmission) tractors to brake without reducing the output force from the transmission. For modern CVT tractors, the output force of the transmission is automatically reduced when the brakes are applied, however this is not instantaneous. During braking therefore, the CVT detects an increased draft force since the vehicle is moved against the brake force and in the draft control mode, this increase in draft force results in the linkage being lifted.

One solution as explained in applicant's patent application publication number EP2984915 A1 is to deactivate the draft control mode and hold the linkage in its position when braking occurs. As a consequence, the driver cannot change the height of the implement, which may not be practical. Furthermore, once the brake is released, the driver must then remember to re-activate the draft control mode otherwise the linkage will remain in the position at the time braking occurred. This can easily be forgotten and may be inconvenient for a driver to do on a regular basis. Further, for the driver's comfort and economy of fuel, it is preferable for the vehicle to remain in the draft mode.

### Object of the Invention

It is an aim of the invention to provide a control system which addresses the problems described above when the brake(s) of a vehicle are applied whilst travelling in the draft control mode.

### Summary of the Invention

According to the invention there is provided a vehicle controlling a linkage for attaching an implement to the vehicle and and/or a linkage on an implement coupled with the vehicle, said vehicle comprising a control system for controlling a draft mode of operation in which the linkage is automatically raised and lowered depending on a draft force detected by the vehicle, characterised in that when one or more of the brakes of the vehicle are applied, the control system sets the detected draft force to the value it was before, or at the moment the brake or brakes were applied so that the linkage will remain in a set linkage positon during braking.

The vehicle may be provided with an implement fully-mounted to a linkage of the vehicle, e.g. a three-point linkage on a tractor, or the implement may be provided as a trailed or semi-mounted implement wherein the vehicle is coupled with and controls the actuation of a linkage provided on the implement, on the tractor or on both, the implement and the tractor itself.

Accordingly, there is provided a vehicle having a linkage for attaching an implement thereto, said vehicle comprising a control system for controlling a draft mode of operation in which the linkage is automatically raised and lowered depending on a draft force detected by the vehicle, characterised in that when one or more of the brakes of the vehicle are applied, the control system sets the detected draft force to the value it was before, or at the moment the brake or brakes were applied so that the linkage will remain in a set linkage positon during braking.

There is also provided a vehicle controlling a linkage on an implement to raise and lower soil engaging means of the implement, said vehicle comprising a control system for controlling a draft mode of operation in which the linkage is automatically raised and lowered depending on a draft force detected by the vehicle, characterised in that when one or more of the brakes of the vehicle are applied, the control system sets the detected draft force to the value it was before, or at the moment the brake or brakes were applied so that the linkage will remain in a set linkage positon during braking.

There is also provided a vehicle having a linkage for attaching an implement thereto, the vehicle to be coupled with a semi-mounted implement, the semi-mounted implement provided with a linkage to raise and lower soil engaging means, the linkage of the tractor and the linkage of the implement controlled conjointly from the vehicle, said vehicle comprising a control system for a draft control mode of operation in which the linkages are automatically raised and lowered depending on a draft force detected by the vehicle, said linkages comprising a lifting cylinder, characterised in that when the vehicle travels at low speeds, or is driven in reverse or is stationary, the control system automatically sets the detected draft force to zero and the draft control mode of operation is maintained.

In this way an increase in draft force during braking is not registered and thus unintended movement of the linkage is avoided.

Preferably, the set linkage position is similar to the position before braking or corresponds to the position of the draft force at the moment of braking.

When one or more of the brakes of the vehicle are applied above a predetermined vehicle speed, the control system preferably sets the detected draft force to the value it was before, or at the moment the brake or brakes were applied so that the linkage will remain in a positon during braking which is similar to the position before braking and/or corresponds to a position of the draft force at the moment of braking.

When the brake or brakes are disapplied, the control system preferably detects a current draft force and the linkage is automatically raised and lowered accordingly.

Since the system remains in a draft control mode throughout, the system reverts back to moving the linkage depending on the current draft force detected.

Preferably, the vehicle is an agricultural tractor.

There is further provided a control method for a vehicle, the vehicle having a linkage for attaching an implement to the vehicle, or the vehicle controlling a linkage on an implement coupled with the vehicle, the method comprising the steps of:
detecting a draft force; and
providing a draft control mode of operation for the vehicle, in which the linkage is automatically raised and lowered depending on the detected draft force;
wherein the method further comprises the steps of:
monitoring the application of the brakes of the the vehicle; and
when one or more of the brakes of the vehicle are applied, setting the detected draft force to the value it was before the brakes were applied, or setting the detected draft force to the value it was at the moment the brake or brakes were applied, so that the linkage will remain in a set linkage positon during braking.

Control of the linkage is used to control the raising and lowering of soil-engaging means of an implement. It will be understood that the method may be further adapted to incorporate the steps as described above in relation to the operation of the vehicle.

There is also provided a controller for a vehicle configured to carry out the method as described above.

There is also provided a computer program product comprising a non-transitory storage medium readable by a processing circuit and storing instructions for execution by the processing circuit for performing the steps of the above method.

### Detailed Description of the Invention

The invention will now be described, by way of example only, with reference to the following drawings in which:

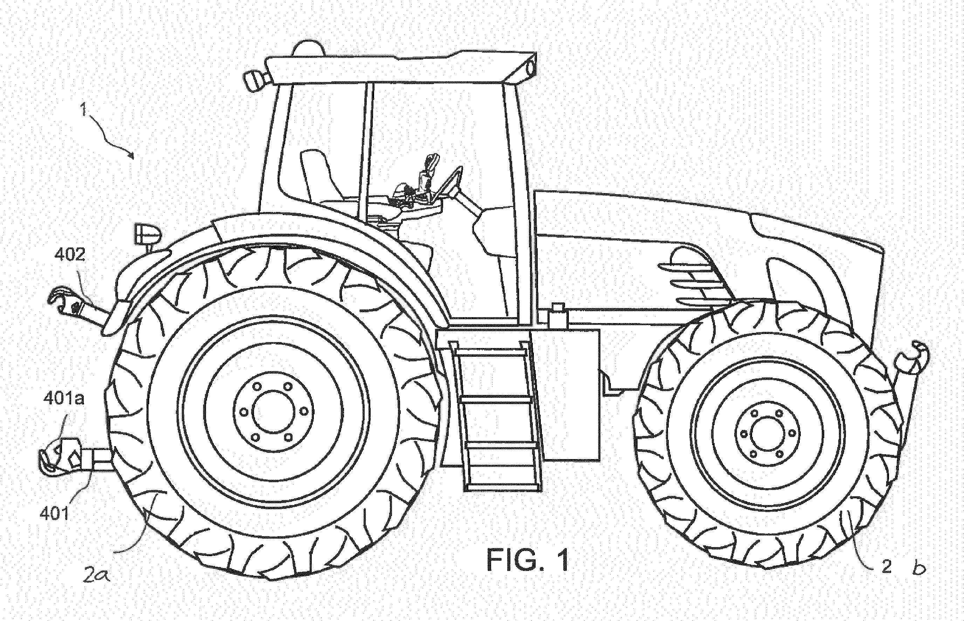

Fig. 1 is a side view of a tractor,
Fig. 2 is side view of a tractor showing a linkage at the rear in accordance with the invention,
Fig. 3 is a side view of a tractor for control of a linkage on a trailed implement, in accordance with a further aspect of the invention, and
Fig. 4 is a side view of a tractor for control of a linkage on a semi-mounted implement, in accordance with a further aspect of the invention.

Referring to the drawings, an agricultural tractor 1 has a driveline 2 having a combustion engine 3, a continuously variable transmission, or CVT, T of the hydrostatic-mechanical split type and a rear axle housing 300. Combustion engine 3 is connected to the CVT, T by chassis part 310. Rear wheels 2a and front wheels 2a are driven by driveline 2.

A three-point linkage 400 is attached to the rear axle housing 300 and mainly consists of two lower lifting arms 401 to which an implement is attached. A plough 500 with ground engaging means 501 is attached to lower lifting arms 401. An additional top link 402 connects the implement 500 to the tractor 1. The top link 402 is of a hydraulic type adjustable in length to adjust the inclination of the plough 500 with the ground. The lower lifting arms 401 can be pivoted about axis A by respective hydraulic actuating cylinders 403 which move rocker arm 404 and lift rod 405. The height of the lifting arms can thus be changed by pivoting the lifting arms about axis A and this movement is hereafter referred to as the vertical displacement of the lifting arms or more generally the lifting height. The hydraulic actuating cylinders 403 are supplied with an actuating fluid by a control valve 406. Control valve 406 controls which chamber 403a (to lift the implement) or chamber 403b (to lower the implement) of the hydraulic actuating cylinders 403 is charged with fluid. Control valve 406 is connected to a pump 407 which is driven by combustion engine 3 and connected with a fluid tank 108.

The position of the lower lift arms 401 is indirectly measured by a position sensor 409 which senses the position of a cam 410 attached to rocker arm 404.

An additional pressure sensor 411 is provided to measure the fluid pressure in the chamber 403a of the hydraulic actuating cylinders 403. The fluid in chamber 403a is compressed when the implement weight is fully taken up by the three-point linkage 400 and therefore a pressure increase indicates movement of the implement to a high position for transportation.

A tractor control unit 13 is provided to control various functions of the vehicle. The control unit 13 is electronically connected to various components via CAN-BUS, for example, the transmission and display and input devices. The control unit 13 also contains software to drive the electronic linkage control system. The control unit 13 is connected to an input and display device 14 in the tractor cab 5 to receive inputs from the operator and to show information to the operator. The input and display device 14 include means to adjust and display parameters related to the electronic linkage control system such as the mix controller or the depth controller described above.

Position sensor 409, control valve 406 and pressure sensor 411 are connected to the control unit 13.

As described in applicant's pending application WO2013/053645 the driveline 2 or transmission T, which may be of hydrostatic mechanical split type transmission, comprises sensors to determine various driving parameters such as draft force, vehicle speed, driving direction or whether the vehicle is at a standstill.

The change in draft force is fed into a tractor control unit 13 which is programmed to lift, or lower the linkage in response to the change, as programmed.

There are various situations where the movement of the linkage in response to a change in draft force in draft mode may cause problems, for example during braking. The draft force is the force applied by the implement against the pull force of the tractor and therefore is applied in a direction opposite to the direction of travel of the tractor. The implement may be stowed for transportation, or attached for operation without contacting the ground, or semi mounted or fully mounted. The term implement covers all tools, attachments and equipment which can be attached to a tractor, or agricultural machine at the front, or rear including, but not limited to the following: ploughs, tow bars, sprayers, mowers, drills and planters. The same applies when the implement is trailed, e.g. by connection to a ball hitch, and has soil engaging means which are raised and lowered by a respective linkage.

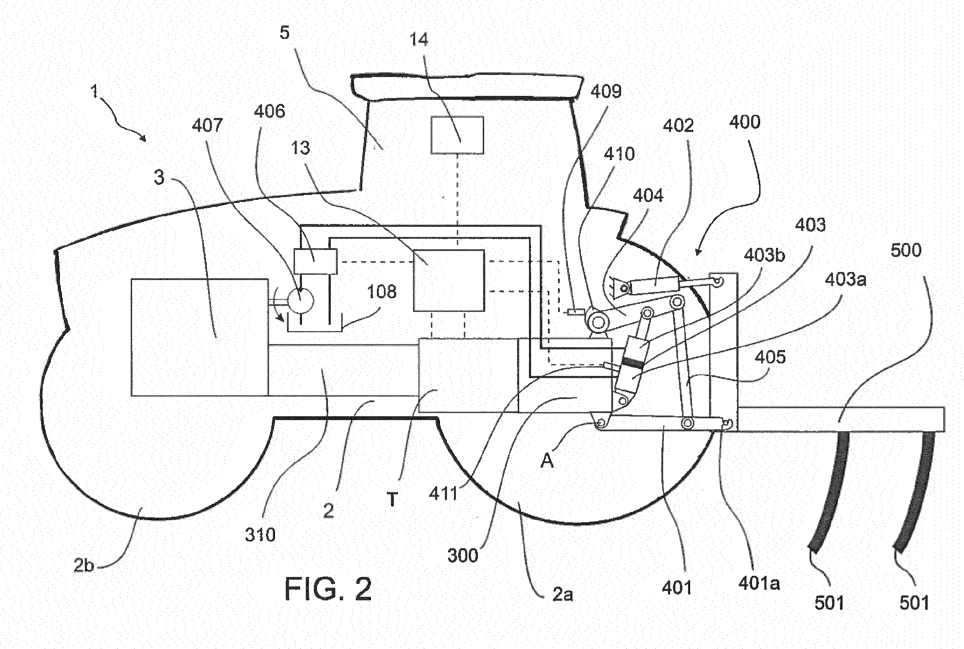

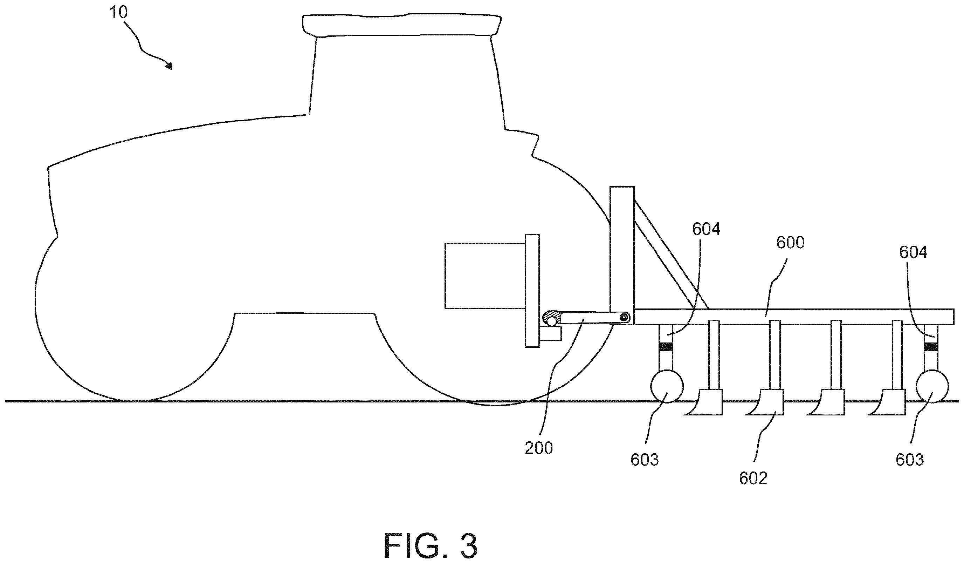

In a further embodiment of the invention, in Fig. 3 a tractor 10 is shown which is coupled with a trailed implement 600 via a tow bar 200 or other suitable trailer connection. The trailed implement 600, which may comprise a plough or other similar tillage or soil cultivation apparatus, is provided with ground- or soil-engaging means 602, which are supported using at least one implement wheel 603. The height of the soil-engaging means 602, and accordingly their engagement with the ground, is controlled through actuation of an implement-mounted linkage or lift cylinder 604 coupled to the implement wheel 603, but it will be understood that other implement linkage configurations may be used. The actuation of the linkage 604 is controlled via a suitable communication connection with the tractor control unit 13 (shown in Fig. 2), in a similar manner as described above for a linkage-mounted implement.

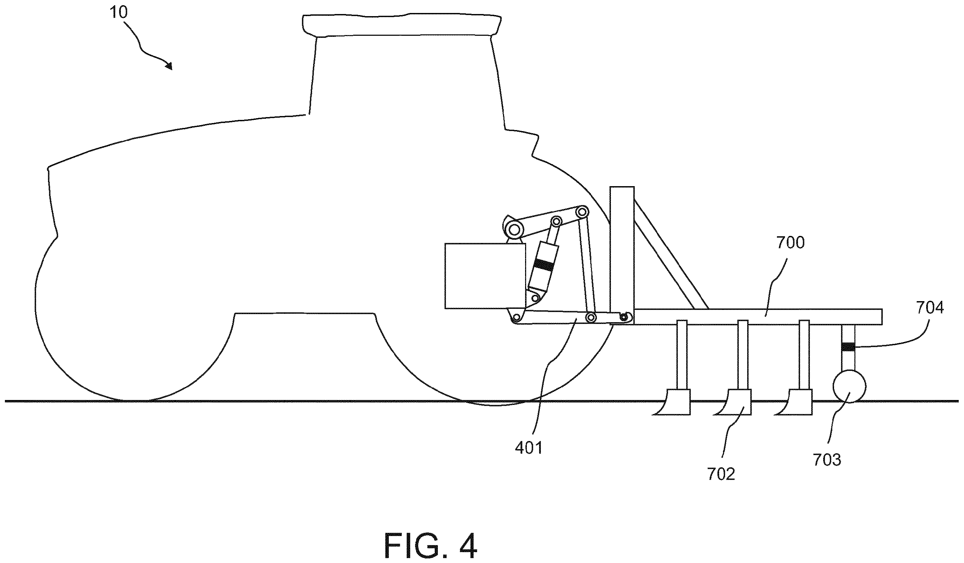

In a further embodiment of the invention, in Fig. 4 a tractor 10 is shown which is coupled with a semi-mounted implement 700 via the lower lifting arms 401. The semi-mounted implement 700, which may comprise a plough or other similar tillage or soil cultivation apparatus, is also provided with ground- or soil-engaging means 702, which are partly supported using at least one implement wheel 703. The height of the soil-engaging means 702, and accordingly their engagement with the ground, is controlled through actuation of an implement-mounted linkage or lift cylinder 704 coupled to the implement wheel 703 and the lower lifting arms 401 conjointly, but it will be understood that other implement linkage configurations may be used. The actuation of the linkage 704 is controlled via a suitable communication connection with the tractor control unit 13 (shown in Fig. 2), in a similar manner as described above for a linkage-mounted implement.

An increase in draft force during the early stages of braking results in the linkage (and any implement attached), or a linkage provided on an implement itself, being lifted.

The present invention addresses the aforementioned problems during braking by the control system keeping the tractor in the draft control mode, storing the last draft force value before or at the moment of braking, and setting the draft force to this value. This has the effect of holding the linkage in a set positon (since the control system will not detect a change in draft force, just the constant set draft value) or marginally moving the linkage to a position similar to the position before braking. This marginal movement would not cause any safety issue. Keeping the draft mode active enables the driver to manually adjust the linkage height.

In this way, the vehicle is kept in the draft control mode, but the draft force is set. When the driver releases the brake(s) and brakes for a second time, the control system recovers the draft force just before, or at the time the brakes are applied for the second time and uses this value as the set value.

Because the draft control mode remains active throughout braking, as soon as the braking is over, the control system returns to detecting the draft force from the CVT.

The invention has a safety advantage when travelling along the road. When moving from a field to a road, a driver will typically change the control mode from draft control mode to the positional control mode to avoid unnecessary movement of the linkage when moving along the road. This change can easily be forgotten by the driver. With the invention, even if the driver does not switch to position control mode when travelling along the road, the linkage will be held at or moved to a set height supporting an implement above the road when the brakes are applied.

Alternatively, the invention may be used when the brakes are applied above a certain vehicle speed, of say 1 kph, while below that level, the control system deactivates the draft control mode and holds the linkage in its position when braking occurs as described in applicant's patent application publication number EP2984915 A1.

The invention provides a suitable control method for a draft control mode of a vehicle. The invention may be provided as a controller for use in a vehicle, the controller arranged to perform the steps of the method. Additionally or alternatively, the invention may be provided as a computer program product comprising a non-transitory storage medium readable by a processing circuit and storing instructions for execution by the processing circuit for performing the steps of the above method.

The invention is not limited to the embodiments described herein, and may be modified or adapted without departing from the scope of the invention as defined by the appended claims.

## Claims

1. A vehicle (1,10) controlling a linkage (400,604) for controlling the raising and lowering of a soil-engaging portion (501,602,702) of an implement (500,600,700), the vehicle comprising a control system (13) for controlling a draft control mode of operation in which at least one linkage is automatically raised and lowered depending on a draft force detected by the vehicle, **characterised in that** when one or more of the brakes of the vehicle are applied, the control system sets the detected draft force to the value it was before the brake or brakes were applied, or sets the detected draft force to the value it was at the moment the brake or brakes were applied so that the linkage will remain in a set linkage positon during braking.

2. The vehicle of claim 1, wherein the vehicle comprises a linkage (400) for attaching an implement thereto, where the vehicle linkage is automatically raised and lowered depending on a draft force detected by the vehicle.

3. The vehicle of claim 1 or claim 2, wherein the vehicle is coupled with a trailed implement (600), the trailed implement provided with a linkage (604) to raise and lower soil engaging means (602) of the implement, the implement linkage controlled from the vehicle, wherein the linkage is automatically raised and lowered depending on a draft force detected by the vehicle,

4. A vehicle as claimed in any one of claims 1-3 wherein the set linkage position is similar to the position before braking or corresponds to the position of the draft force at the moment of braking.

5. A vehicle as claimed in any preceding claim, wherein when one or more of the brakes of the vehicle are applied above a predetermined vehicle speed level, the control system sets the detected draft force to the value it was before, or at the moment the brake or brakes were applied so that the linkage will remain in a positon during braking which is similar to the position before braking and/or corresponds to a position of the draft force at the moment of braking.

6. A vehicle as claimed in any preceding claim wherein when the brake or brakes are disapplied, the control system detects a current draft force and the linkage is automatically raised and lowered accordingly.

7. A vehicle as claimed in any preceding claim wherein the vehicle is an agricultural tractor (1,10).

8. A control method for a vehicle (1,10), the vehicle having a linkage (400) for attaching an implement (500,700) to the vehicle, and/or the vehicle controlling a linkage (604) on an implement (600) coupled with the vehicle, the method comprising the steps of:
detecting a draft force; and
providing a draft control mode of operation for the vehicle, in which the linkage is automatically raised and lowered depending on the detected draft force;
wherein the method further comprises the steps of:
monitoring the application of the brakes of the vehicle; and
when one or more of the brakes of the vehicle are applied, setting the detected draft force to the value it was before the brakes were applied, or setting the detected draft force to the value it was at the moment the brake or brakes were applied, so that the linkage will remain in a set linkage positon during braking.

9. A controller for a vehicle configured to carry out the method as claimed in claim 8.

10. A computer program product comprising a non-transitory storage medium readable by a processing circuit and storing instructions for execution by the processing circuit for performing the steps of the method as claimed in claim 8.

## Patentansprüche

1. Fahrzeug (1, 10), das einen Lenker (400, 604) zum Steuern/Regeln des Hebens und Senkens eines erdeingreifenden Teils (501, 602, 702) eines Anbaugeräts (500, 600, 700) steuert/regelt, wobei das Fahrzeug ein Steuer/Regelsystem (13) zum Steuern/Regeln eines Zugsteuer- bzw. Zugregel-Betriebsmodus aufweist, in dem mindestens ein Lenker in Abhängigkeit von einer von dem Fahrzeug detektierten Zugkraft automatisch angehoben und abgesenkt wird, **dadurch gekennzeichnet, dass** das Steuer-/Regelsystem, wenn eine oder mehrere Bremsen des Fahrzeugs betätigt werden, die detektierte Zugkraft auf den Wert setzt, den sie vor der Betätigung der Bremse oder Bremsen besaß, oder es die detektierte Kraft auf den Wert setzt, den sie zum Zeitpunkt der Betätigung der Bremse oder Bremsen besaß, so dass der Lenker während des Bremsens in einer eingenommenen Lenkerposition verbleibt.

2. Fahrzeug nach Anspruch 1, wobei das Fahrzeug einen Lenker (400) zum Befestigen eines Anbaugeräts daran aufweist, wobei der Lenker des Fahrzeugs in Abhängigkeit von einer von dem Fahrzeug detektierten Zugkraft automatisch angehoben und abgesenkt wird.

3. Fahrzeug nach Anspruch 1 oder 2, wobei das Fahrzeug mit einem nachgezogenen Anbaugerät (600) verbunden ist, wobei das nachgezogene Anbaugerät mit einem Lenker (604) zum Anheben und Absenken des erdeingreifenden Mittels (602) des Anbaugeräts versehen ist, wobei der Lenker des Anbaugeräts durch das Fahrzeug gesteuert/geregelt wird, wobei der Lenker in Abhängigkeit von einer von dem Fahrzeug detektierten Zugkraft automatisch angehoben und abgesenkt wird.

4. Fahrzeug nach einem der Ansprüche 1-3, wobei die gesetzte Lenkerposition ähnlich der Position vor dem Bremsen ist oder der Position der Zugkraft zum Zeitpunkt des Bremsens entspricht.

5. Fahrzeug nach einem der vorhergehenden Ansprüche, wobei das Steuer/Regelsystem, wenn eine oder mehrere Bremsen des Fahrzeugs oberhalb eines vorbestimmten Geschwindigkeitsniveaus des Fahrzeugs betätigt werden, die detektierte Kraft auf ihren Wert setzt, den sie zuvor oder zum Zeitpunkt der Betätigung der Bremse oder Bremsen besaß, so dass der Lenker während des Bremsens in einer Position verbleibt, die ähnlich der Position vor dem Bremsen ist oder einer Position der Zugkraft zum Zeitpunkt des Bremsens entspricht.

6. Fahrzeug nach einem der vorhergehenden Ansprüche, wobei das Steuer/Regelsystem, wenn die Bremse oder Bremsen freigegeben wird bzw. werden, eine aktuelle Zugkraft detektiert und der Lenker automatisch entsprechend angehoben und gesenkt wird.

7. Fahrzeug nach einem der vorhergehenden Ansprüche, wobei das Fahrzeug ein landwirtschaftlicher Traktor (1, 10) ist.

8. Steuer/Regelverfahren für ein Fahrzeug (1, 10), wobei das Fahrzeug einen Lenker (400) zum Befestigen eines Anbaugeräts (500, 700) an dem Fahrzeug aufweist, und/oder das Fahrzeug einen mit dem Fahrzeug verbundenen Lenker (604) an einem Anbaugerät (600) steuert/regelt, wobei das Verfahren die folgenden Schritte aufweist:
Detektieren einer Zugkraft; und
Bereitstellen eines Zugsteuer- bzw. Zugregel-Betriebsmodus für das Fahrzeug, in dem der Lenker in Abhängigkeit von der detektierten Zugkraft automatisch angehoben und abgesenkt wird, wobei das Verfahren weiterhin die folgenden Schritte aufweist:
Überwachen der Verwendung der Bremsen des Fahrzeugs; und
wenn eine oder mehrere der Bremsen des Fahrzeugs betätigt werden, Setzen der detektierten Zugkraft auf den Wert, den sie vor der Betätigung der Bremsen besaß, oder Setzen der detektierten Zugkraft auf den Wert, den sie zum Zeitpunkt der Betätigung der Bremse oder Bremsen besaß, so dass der Lenker während des Bremsens in einer eingenommenen Lenkerposition verbleibt.

9. Controller für ein Fahrzeug, das zum Ausführung des Verfahrens nach Anspruch 8 konfiguriert ist.

10. Computerprogrammprodukt mit einem nicht-flüchtigen Speichermedium, das durch einen Verarbeitungsschaltkreis lesbar ist und Befehle für die Ausführung durch den Verarbeitungsschaltkreis zum Ausführen der Schritte des Verfahrens nach Anspruch 8 speichert.

## Revendications

1. Véhicule (1, 10) commandant un attelage (400, 604) pour commander la montée et la descente d'une portion de travail du sol (501, 602, 702) d'un outil (500, 600, 700), le véhicule comprenant un système de commande (13) pour commander un mode de fonctionnement de commande de traction dans lequel au moins un attelage est monté et descendu automatiquement selon une force de traction détectée par le véhicule, **caractérisé en ce que** lorsque l'un ou plusieurs des freins du véhicule sont appliqués, le système de commande établit la force de traction détectée à la valeur qu'elle avait avant que le frein ou les freins soient appliqués, ou établit la force de traction détectée à la valeur qu'elle avait au moment où le frein ou les freins ont été appliqués de sorte que l'attelage restera dans une position d'attelage établie pendant le freinage.

2. Véhicule selon la revendication 1, dans lequel le véhicule comprend un attelage (400) pour y attacher un outil, où l'attelage de véhicule est monté et descendu automatiquement selon une force de traction détectée par le véhicule.

3. Véhicule selon la revendication 1 ou la revendication 2, dans lequel le véhicule est couplé à un outil traîné (600), l'outil traîné étant pourvu d'un attelage (604) pour monter et descendre un moyen de travail du sol (602) de l'outil, l'attelage d'outil étant commandé depuis le véhicule, dans lequel l'attelage est monté et descendu automatiquement selon une force de traction détectée par le véhicule.

4. Véhicule selon l'une quelconque des revendications 1 à 3, dans lequel la position d'attelage établie est similaire à la position avant freinage ou correspond à la position de la force de traction au moment du freinage.

5. Véhicule selon une quelconque revendication précédente, dans lequel lorsque l'un ou plusieurs des freins du véhicule sont appliqués au-dessus d'un niveau de vitesse de véhicule prédéterminé, le système de commande établit la force de traction détectée à la valeur qu'elle avait avant, ou au moment où le frein ou les freins ont été appliqués de sorte que l'attelage restera dans une position pendant le freinage qui est similaire à la position avant freinage et/ou correspond à une position de la force de traction au moment du freinage.

6. Véhicule selon une quelconque revendication précédente, dans lequel lorsque le frein ou les freins ne sont pas appliqués, le système de commande détecte une force de traction actuelle et l'attelage est monté et descendu automatiquement en conséquence.

7. Véhicule selon une quelconque revendication précédente, dans lequel le véhicule est un tracteur agricole (1, 10).

8. Procédé de commande pour un véhicule (1, 10), le véhicule comportant un attelage (400) pour attacher un outil (500, 700) au véhicule, et/ou le véhicule commandant un attelage (604) sur un outil (600) couplé au véhicule, le procédé comprenant les étapes de :
détection d'une force de traction ; et
fourniture d'un mode de fonctionnement de commande de traction pour le véhicule, dans lequel l'attelage est monté et descendu automatiquement selon la force de traction détectée ;
dans lequel le procédé comprend en outre les étapes de :
surveillance de l'application des freins du véhicule ; et
lorsque l'un ou plusieurs des freins du véhicule sont appliqués, établissement de la force de traction détectée à la valeur qu'elle avait avant que les freins soient appliqués, ou établissement de la force de traction détectée à la valeur qu'elle avait au moment où le frein ou les freins ont été appliqués, de sorte que l'attelage restera dans une position d'attelage établie pendant le freinage.

9. Dispositif de commande pour un véhicule configuré pour réaliser le procédé tel que revendiqué à la revendication 8.

10. Produit programme d'ordinateur comprenant un support de stockage non transitoire lisible par un circuit de traitement et stockant des instructions pour une exécution par le circuit de traitement pour réaliser les étapes du procédé tel que revendiqué à la revendication 8.
